# EUROPEAN PATENT APPLICATION

(11) **EP 4 847 836 A1**
(43) Date of publication of application: **02.12.2026**
(21) Application number: 26173255.6
(22) Date of filing: 20.04.2026
(51) Int. Cl.: F24C 15/00, A23B 2/53, F24C 7/08

(54) **AN OVEN COMPRISING A UV LIGHT SOURCE**

(30) Priority: 28.05.2025 TR 2025006971
(71) Applicant: Arçelik Anonim Sirketi, 34445 Istanbul (TR)
(72) Inventor: ERDEM, Funda, 34445 Istanbul (TR); CELIK, Filiz, 34445 Istanbul (TR); MARASLI, Mehmet, 34445 Istanbul (TR); ERCAN, Ece, 34445 Istanbul (TR)

(57) **Abstract**

The present invention relates to an oven (1) comprising a body (2); a cooking chamber (3) disposed in the body (2) and suitable for performing a cooking process therein; and a UV light source (4) disposed in the body (2) and configured to emit UV radiation into the cooking chamber (3).

## Description

The present invention relates to an oven comprising a UV light source, wherein said UV light source is protected from high temperatures in the cooking chamber.

In ovens, UV light application is used to increase vitamin D synthesis in mushrooms and dough-based food products containing yeast. In order to increase vitamin D synthesis during fermentation or baking of dough-based food products, a UV light source is generally integrated into the oven, typically into the cooking chamber. Due to the low operating temperature of the UV light source, as a result of heat transfer occurring from the hot cooking chamber toward the UV light source, the UV light source and its surrounding environment exceed a critical temperature. Therefore, this region needs to be cooled by active methods such as fans or Peltier elements, or by passive methods. Preferably, UV radiation is applied to dough-based food products only for a certain duration during the fermentation phase, and the UV light source is turned off once the fermentation process is completed. Since the temperature of the cooking chamber is around 40°C during the fermentation process, the temperature of the UV light source does not exceed the critical value in this phase. Therefore, there is no need to cool the UV light source. After the fermentation process, the baking process begins. During the baking process, since the temperature of the cooking chamber reaches high levels, the UV light source and its surrounding region need to be cooled in this phase. This results in additional energy loss, additional cost, complex design, and noise problems. Therefore, there is a need for a configuration wherein the need for cooling the UV light source in the body by active or passive systems is eliminated.

In the state of the art European Patent Application No. EP4299989, an oven comprising a UV light source is disclosed.

The aim of the present invention is the realization of an oven, wherein the UV light source is enabled to be protected from high temperatures in the cooking chamber in a cost-effective manner.

The oven realized in order to attain the aim of the present invention, explicated in the first claim and the respective claims thereof, comprises a body, a cooking chamber, a UV light source configured to emit UV radiation into the cooking chamber, and a thermal protection member. The thermal protection member has an open position and a closed position. When in the open position, the thermal protection member allows UV radiation emitted from the UV light source to reach the cooking chamber. In other words, when the thermal protection member is in the open position, the surface of the UV light source facing the cooking chamber is at least partially opened. When the thermal protection member is in the open position, heat in the cooking chamber affects the UV light source to a greater extent. When the thermal protection member is in the closed position, the surface of the UV light source facing the cooking chamber is closed. Thus, the effect of heat in the cooking chamber on the UV light source is at least partially prevented. Consequently, particularly in cases where UV radiation is not required and baking is performed at high temperatures, the exposure of the UV light source to high temperatures is prevented by means of the thermal protection member. The thermal protection member is positioned so as to be moved linearly between the open position and the closed position. Thus, the thermal protection member is enabled to be moved easily.

In another embodiment of the present invention, the cooking chamber has a box form with an open front side. Each surface of the cooking chamber, except for the front side, has a respective side wall. At least one cut-out is provided on a side wall of the cooking chamber. The UV light source is positioned between the body and the cooking chamber such that UV radiation passes through the cut-out and is transmitted into the cooking chamber. The cut-out is closed by a protective glass. Thus, the UV light source is enabled to be affected less by the heat in the cooking chamber.

In another embodiment of the present invention, the oven comprises an electric motor. Motion provided by the electric motor is transmitted to the thermal protection member by means of a movement group. Thus, the thermal protection member is enabled to move between the open position and the closed position by means of the motion provided by the electric motor. Consequently, the thermal protection member is enabled to be moved automatically.

In another embodiment of the present invention, the movement group comprises a cam connected to the electric motor and a spring connected at one end to the cam and at the other end to the thermal protection member. Thus, the rotational motion provided by the electric motor is converted into linear motion by means of the cam and the spring. Consequently, the thermal protection member is enabled to move between the open position and the closed position in a safe and cost-effective manner.

In another embodiment of the present invention, the movement group comprises a gearwheel connected to the electric motor and rotating together with the electric motor. The gearwheel is engaged with a toothed surface formed on the thermal protection member. Thus, the rotational motion provided by the electric motor is transmitted to the thermal protection member in a more cost-effective manner. Consequently, the thermal protection member is enabled to move between the open position and the closed position in a safe and cost-effective manner.

In another embodiment of the present invention, the oven comprises a casing. The casing at least partially surrounds the UV light source. The casing is connected to the gearwheel. The casing moves together with the gearwheel. There is an opening on at least one portion of the casing. When the gearwheel rotates to bring the thermal protection member into the open position, the opening provided on the casing is aligned with the surface of the UV light source facing the cut-out. This position is the emission position of the casing. When the gearwheel rotates to bring the thermal protection member into the closed position, a wall of the casing is positioned between the thermal protection member and the UV light source so as to enable the UV light source to be protected from heat more effectively. This position is the protection position of the casing. Thus, the UV light source is enabled to be better protected from heat coming from the cooking chamber.

In another embodiment of the present invention, the casing has a C form. Thus, the casing is enabled to move between the emission position and the protection position by rotational motion.

In another embodiment of the present invention, at least a portion of the casing is coated with a thermal insulation material. Thus, the UV light source is enabled to be protected from high temperatures more effectively.

In another embodiment of the present invention, the UV light source is connected to the thermal protection member. Thus, the UV light source moves together with the thermal protection member. In the region between the body and the cooking chamber, the temperature decreases as the distance from the region where the cut-out is located increases. Since the UV light source is simultaneously moved away from the cut-out while the thermal protection member is brought to the closed position, the UV light source is enabled to be moved to a relatively cooler region.

In another embodiment of the present invention, the oven comprises a control unit that regulates the operation thereof. The control unit controls the electric motor to move the thermal protection member between the open position and the closed position. The control unit also controls whether the UV light source is active. When the UV light source is activated by the control unit, the thermal protection member is automatically brought to the open position or maintained in the open position by the control unit. Thus, when active, the UV light source is enabled to emit UV radiation into the cooking chamber.

In another embodiment of the present invention, when the UV light source is deactivated by the control unit, the thermal protection member is automatically brought to the closed position or maintained in the closed position by the control unit. Thus, when inactive, the UV light source is enabled to be effectively protected from heat in the cooking chamber.

In another embodiment of the present invention, the oven comprises a temperature sensor for measuring the temperature in the cooking chamber. When the value received from the temperature sensor exceeds a predetermined threshold value, the control unit brings the thermal protection member to the closed position so that the UV light source is not affected by said high temperature. Thus, the malfunctioning of the UV light source due to exposure to high temperature is prevented.

By means of the present invention, an oven is realized, wherein the UV light source is enabled to be protected from high temperatures by means of a thermal protection member that is suitable to be actuated by an electromechanical system, without requiring the use of an active cooling system.

The oven realized in order to attain the aim of the present invention is illustrated in the attached figures, where:

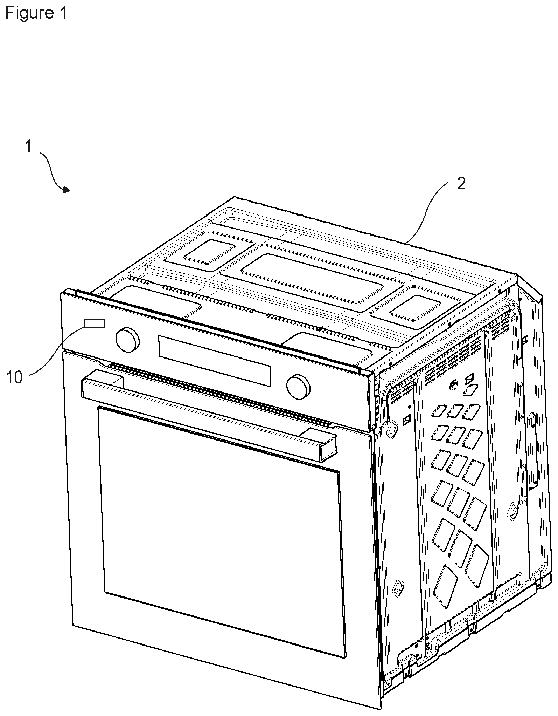

Figure 1 - is the perspective view of the oven related to an embodiment of the present invention.
Figure 2 - is the partial schematic view of the body and the cooking chamber of the oven related to another embodiment of the present invention.
Figure 3 - is the partial perspective view of the UV light source, the thermal protection member and the movement group of the oven related to another embodiment of the present invention, when the thermal protection member is in the open position.
Figure 4 - is the partial perspective view of the UV light source, the thermal protection member and the movement group of the oven related to another embodiment of the present invention, when the thermal protection member is in the closed position.
Figure 5 - is the partial perspective view of the UV light source, the thermal protection member and the movement group of the oven related to another embodiment of the present invention, when the thermal protection member is in the open position.
Figure 6 - is the partial perspective view of the UV light source, the thermal protection member and the movement group of the oven related to another embodiment of the present invention, when the thermal protection member is in the closed position.
Figure 7 - is the partial perspective view of the UV light source, the thermal protection member and the movement group of the oven related to another embodiment of the present invention, when the thermal protection member is in the open position.
Figure 8 - is the partial perspective view of the UV light source, the thermal protection member and the movement group of the oven related to another embodiment of the present invention, when the thermal protection member is in the closed position.

The elements illustrated in the figures are numbered as follows:
1. Oven
2. Body
3. Cooking chamber
   31. Side wall
   32. Cut-out
4. UV light source
   41. Light source housing
5. Thermal protection member
   51. Toothed surface
6. Electric motor
7. Movement group
   71. Cam
   72. Spring
   73. Gearwheel
8. Protective glass
9. Casing
10. Control unit

The oven (1) comprises a body (2); a cooking chamber (3) disposed in the body (2) and suitable for performing a cooking process therein; and a UV light source (4) disposed in the body (2) and configured to emit UV radiation into the cooking chamber (3).

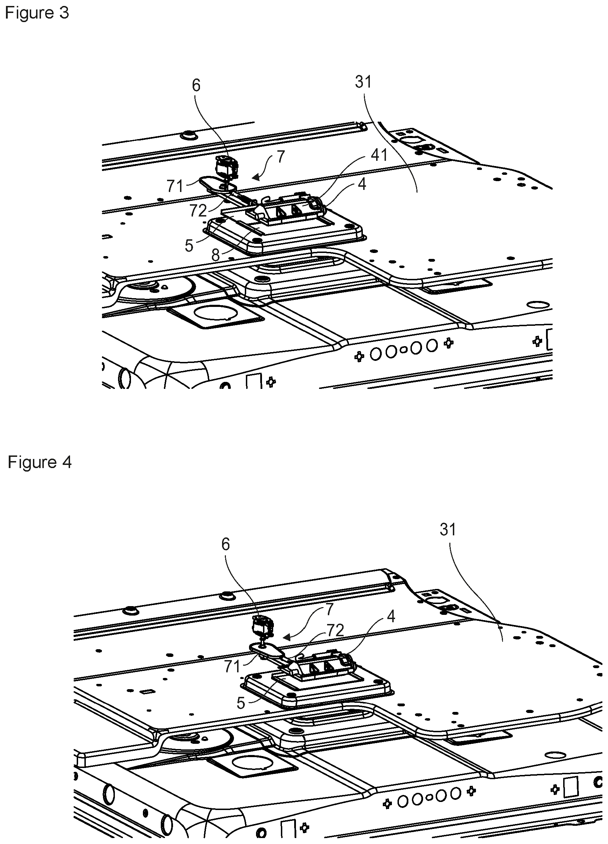

The oven (1) of the present invention comprises at least one thermal protection member (5) having a closed position wherein the thermal protection member (5) enables the surface of the UV light source (4) facing the cooking chamber (3) to be at least partially closed, and an open position wherein the thermal protection member (5) opens said surface so as to allow the UV radiation emitted from the UV light source (4) to be transmitted into the cooking chamber (3). As the temperature of the cooking chamber (3) increases, heat transfer occurs toward the UV light source (4). The UV light source (4) is positioned in a light source housing (41). As shown in Figures 3 to 8, surfaces of the UV light source (4), except for the surface facing the cooking chamber (3), are surrounded by the light source housing (41). When the UV light source (4) is activated, the thermal protection member (5) is brought to the open position so that the UV radiation emitted from the UV light source (4) spreads into the cooking chamber (3). When the temperature in the cooking chamber (3) increases, the thermal protection member (5) is brought to the closed position to prevent the UV light source (4) from being damaged. The thermal protection member (5) is coated with a thermal insulation material. When the thermal protection member (5) is brought to the closed position, heat coming from the cooking chamber (3) is prevented from directly reaching the UV light source (4). Thus, the UV light source (4) is enabled to be protected from high temperatures in a cost-effective manner.

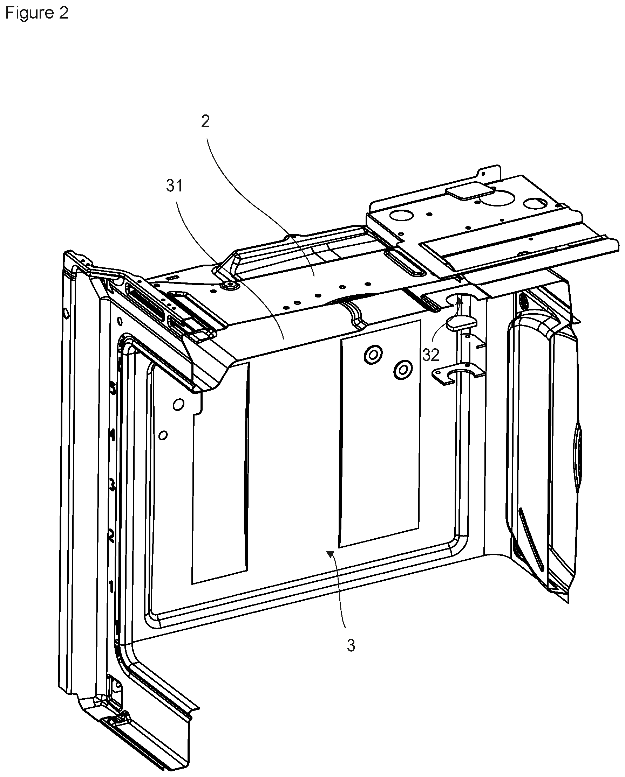

In an embodiment of the present invention, the oven (1) comprises a cut-out (32) provided on at least one side wall (31) of the cooking chamber (3); the UV light source (4) positioned outside the cooking chamber (3) such that the UV radiation emitted from the UV light source (4) passes through the cut-out (32) to be transmitted into the cooking chamber (3); and a protective glass (8) that almost completely closes the cut-out (32) while allowing the UV radiation to pass therethrough. As shown in Figures 2 to 8, the cut-out (32) is preferably provided on the side wall (31) at the upper portion of the cooking chamber (3). The side wall (31) located at the upper portion of the cooking chamber (3) is also referred to as ceiling. The UV light source (4) is positioned between the body (2) and the side wall (31) so as to face the cut-out (32). As shown in Figures 3, 5, and 7, when the thermal protection member (5) is in the open position and the UV light source (4) is activated, the UV radiation emitted from the UV light source (4) passes through the cut-out (32) and reaches the cooking chamber (3). The cut-out (32) is almost completely closed by the protective glass (8). By means of the protective glass (8), heat in the cooking chamber (3) is at least partially prevented from reaching the interior of the body (2). When the thermal protection member (5) is brought to the closed position, the thermal protection member (5) almost completely covers the cut-out (32) and thus the protective glass (8). Thus, heat in the cooking chamber (3) is more effectively prevented from reaching the UV light source (4). In Figures 4, 6, and 8, the thermal protection member (5) is in the closed position.

In another embodiment of the present invention, the oven (1) comprises an electric motor (6) and a movement group (7) that is connected to the electric motor (6) and that transmits the motion provided by the electric motor (6) to the thermal protection member (5) so as to enable the thermal protection member (5) to be moved between the open position and the closed position. A rotational motion is provided by the electric motor (6). The movement group (7) is connected at one end to the electric motor (6) and at the other end to the thermal protection member (5) so as to transmit the motion provided by the electric motor (6) to the thermal protection member (5). The thermal protection member (5) is moved linearly. The movement group (7) converts the rotational motion provided by the electric motor (6) into linear motion. Thus, when the electric motor (6) rotates in one direction, the thermal protection member (5) is moved from the open position toward the closed position, whereas when the electric motor (6) rotates in the opposite direction, the thermal protection member (5) is moved from the closed position toward the open position.

In another embodiment of the present invention, the oven (1) comprises the movement group (7) having a cam (71) connected to the electric motor (6) and a spring (72) that is connected at one end to the cam (71) and at the other end to the thermal protection member (5) and that is compressed and extended upon the rotation of the cam (71) so as to enable the thermal protection member (5) to be moved between the open position and the closed position. The cam (71) has an eccentric form. When the cam (71) is rotated by 180 degrees by means of the electric motor (6), the spring (72) is compressed and moves the thermal protection member (5) from the open position toward the closed position. In Figure 4, the thermal protection member (5) is in the closed position. When the cam (71) is rotated by a further 180 degrees by the electric motor (6), the spring (72) is extended and moves the thermal protection member (5) from the closed position toward the open position. In Figure 3, the thermal protection member (5) is in the open position.

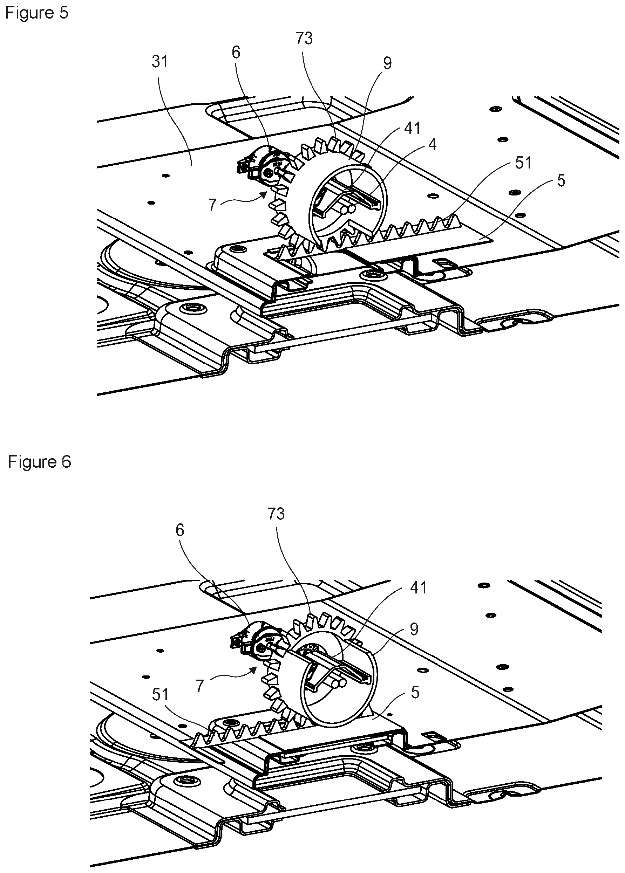

In another embodiment of the present invention, the oven (1) comprises the movement group (7) having a gearwheel (73) connected to the electric motor (6), and the thermal protection member (5) that has a toothed surface (51) engaging with the gearwheel (73) and that is suitable to be moved linearly between the open position and the closed position upon the rotation of the gearwheel (73). The gearwheel (73) rotates together with the electric motor (6). The thermal protection member (5) extends linearly in a direction parallel to the side wall (31). The toothed surface (51) is formed on the surface of the thermal protection member (5) facing the gearwheel (73). Thus, the rotational motion provided by the electric motor (6) is converted into linear motion. Consequently, when the electric motor (6) rotates in one direction, the thermal protection member (5) is moved from the open position toward the closed position, whereas when the electric motor (6) rotates in the opposite direction, the thermal protection member (5) is moved from the closed position toward the open position. In Figure 5, the thermal protection member (5) is in the open position. In Figure 6, the thermal protection member (5) is in the closed position.

In another embodiment of the present invention, the oven (1) comprises a casing (9) that is connected to the gearwheel (73) so as to rotate together with the gearwheel (73) and that has a protection position wherein the casing (9), when the thermal protection member (5) is brought to the closed position by the gearwheel (73), at least partially covers the surface of the UV light source (4) facing the thermal protection member (5), and an emission position wherein the casing (9), when the thermal protection member (5) is brought to the open position by the gearwheel (73), opens the front of the UV light source (4) so as to allow the radiation emitted from the UV light source (4) to reach the cooking chamber (3). The casing (9) at least partially surrounds the UV light source (4). In Figure 5, the thermal protection member (5) is in the open position. As shown in Figure 5, when the thermal protection member (5) is in the open position, the casing (9) is also in the emission position. Thus, the surface of the UV light source (4) facing the cut-out (32) is open. In Figure 6, the thermal protection member (5) is in the closed position. As shown in Figure 6, when the thermal protection member (5) is in the closed position, the casing (9) is also in the protection position. Thus, heat coming from the cooking chamber (3) is blocked by both the thermal protection member (5) and the casing (9), ensuring that the UV light source (4) is protected from high temperatures. In a preferred configuration of the present invention, the casing (9) and the gearwheel (73) are manufactured as a single component. Thus, the casing (9) and the gearwheel (73) occupy less space in the body (2).

In another embodiment of the present invention, the oven (1) comprises the casing (9) having a C form. As shown in Figure 5, when the casing (9) is in the emission position, the opening on the casing (9) is aligned with the surface of the UV light source (4) facing the cut-out (32). As shown in Figure 6, when the casing (9) is in the protection position, the casing (9) is positioned opposite the surface of the UV light source (4) facing the cut-out (32), thereby ensuring that the UV light source (4) is protected from heat more effectively.

In another embodiment of the present invention, the oven (1) comprises the casing (9) at least partially coated with an insulation material. Preferably, the portion of the casing (9) that is positioned opposite the UV light source (4) when the casing (9) is in the protection position is coated with a thermal insulation material. Thus, the UV light source (4) is enabled to be protected from heat in a cost-effective manner.

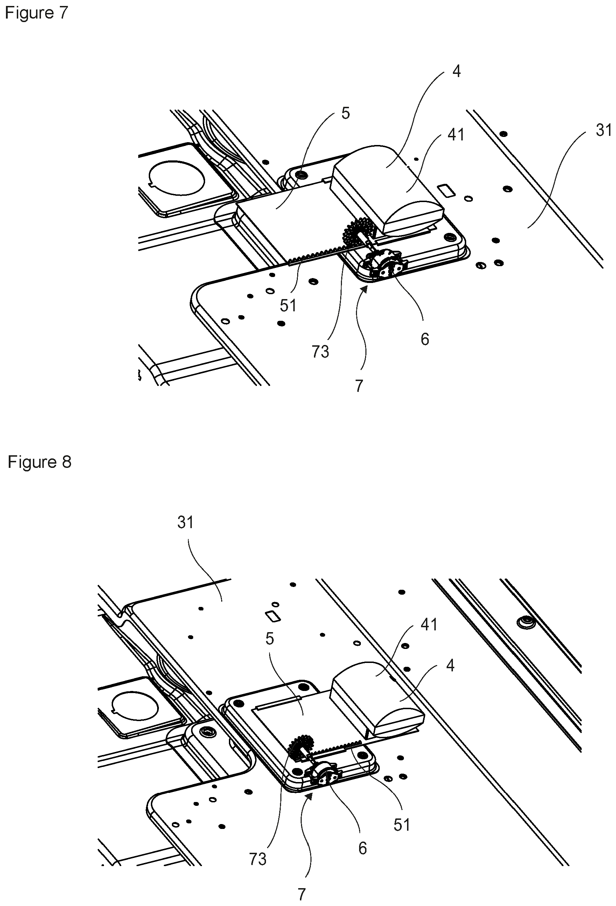

In another embodiment of the present invention, the oven (1) comprises the UV light source (4) connected to the thermal protection member (5) so as to move together with the thermal protection member (5). In Figure 7, the thermal protection member (5) is in the open position. When the thermal protection member (5) is moved from the open position toward the closed position, the UV light source (4) is pushed by the thermal protection member (5) toward a relatively cooler region of the oven (1). Thus, the UV light source (4) is enabled to be protected from high temperatures more effectively. When the thermal protection member (5) is brought back to the open position, the UV light source (4) is pulled by the thermal protection member (5) and repositioned so as to face the cut-out (32) again.

In another embodiment of the present invention, the oven (1) comprises a control unit (10) configured to operate the electric motor (6) such that the thermal protection member (5) is moved from the closed position to the open position when the UV light source (4) is active. Thus, during the cooking stages wherein the UV light source (4) is used, the transmission of UV radiation emitted from the UV light source (4) into the cooking chamber (3) is automatically provided.

In another embodiment of the present invention, the oven (1) comprises the control unit (10) configured to operate the electric motor (6) such that the thermal protection member (5) is moved from the open position to the closed position when the UV light source (4) is not active. Thus, during the cooking stages wherein the UV light source (4) is not used, the thermal protection member (5) is brought to the closed position to ensure that the UV light source (4) is protected from high temperatures.

In another embodiment of the present invention, the oven (1) comprises a temperature sensor disposed in the cooking chamber (3) and configured to measure the temperature therein, and the control unit (10) configured to operate the electric motor (6) such that the thermal protection member (5) is moved from the open position toward the closed position when the value received from the temperature sensor exceeds a predetermined threshold value set by the manufacturer. Thus, when the temperature of the cooking chamber (3) exceeds the range within which the UV light source (4) can operate safely, the UV light source (4) is enabled to be protected by the thermal protection member (5). Thus, the service life of the UV light source (4) is increased.

By means of the present invention, an oven (1) is realized, wherein the UV light source (4) is enabled to be protected from high temperatures in the cooking chamber (3) in a cost-effective manner by means of a thermal protection member (5).

## Claims

1. An oven (1) **comprising** a body (2); a cooking chamber (3) disposed in the body (2) and suitable for performing a cooking process therein; and a UV light source (4) disposed in the body (2) and configured to emit UV radiation into the cooking chamber (3), **characterized by** at least one thermal protection member (5) having a closed position wherein the thermal protection member (5) enables the surface of the UV light source (4) facing the cooking chamber (3) to be at least partially closed, and an open position wherein the thermal protection member (5) opens said surface so as to allow the UV radiation emitted from the UV light source (4) to be transmitted into the cooking chamber (3).

2. An oven (1) as in Claim 1, **characterized by** a cut-out (32) provided on at least one side wall (31) of the cooking chamber (3); the UV light source (4) positioned outside the cooking chamber (3) such that the UV radiation emitted from the UV light source (4) passes through the cut-out (32) to be transmitted into the cooking chamber (3); and a protective glass (8) that almost completely closes the cut-out (32) while allowing the UV radiation to pass therethrough.

3. An oven (1) as in Claim 1 or Claim 2, **characterized by** an electric motor (6) and a movement group (7) that is connected to the electric motor (6) and that transmits the motion provided by the electric motor (6) to the thermal protection member (5) so as to enable the thermal protection member (5) to be moved between the open position and the closed position.

4. An oven (1) as in Claim 3, **characterized by** the movement group (7) having a cam (71) connected to the electric motor (6) and a spring (72) that is connected at one end to the cam (71) and at the other end to the thermal protection member (5) and that is compressed and extended upon the rotation of the cam (71) so as to enable the thermal protection member (5) to be moved between the open position and the closed position.

5. An oven (1) as in Claim 3, **characterized by** the movement group (7) having a gearwheel (73) connected to the electric motor (6), and the thermal protection member (5) that has a toothed surface (51) engaging with the gearwheel (73) and that is suitable to be moved linearly between the open position and the closed position upon the rotation of the gearwheel (73).

6. An oven (1) as in Claim 5, **characterized by** a casing (9) that is connected to the gearwheel (73) so as to rotate together with the gearwheel (73) and that has a protection position wherein the casing (9), when the thermal protection member (5) is brought to the closed position by the gearwheel (73), at least partially covers the surface of the UV light source (4) facing the thermal protection member (5), and an emission position wherein the casing (9), when the thermal protection member (5) is brought to the open position by the gearwheel (73), opens the front of the UV light source (4) so as to allow the radiation emitted from the UV light source (4) to reach the cooking chamber (3).

7. An oven (1) as in Claim 6, **characterized by** the casing (9) that has a C form.

8. An oven (1) as in Claim 6 or Claim 7, **characterized by** the casing (9) at least partially coated with an insulation material.

9. An oven (1) as in any one of the above claims, **characterized by** the UV light source (4) connected to the thermal protection member (5) so as to move together with the thermal protection member (5).

10. An oven (1) as in any one of Claims 3 to 9, **characterized by** a control unit (10) configured to operate the electric motor (6) such that the thermal protection member (5) is moved from the closed position to the open position when the UV light source (4) is active.

11. An oven (1) as in any one of Claims 3 to 10, **characterized by** the control unit (10) configured to operate the electric motor (6) such that the thermal protection member (5) is moved from the open position to the closed position when the UV light source (4) is not active.

12. An oven (1) as in any one of Claims 3 to 11, **characterized by** a temperature sensor disposed in the cooking chamber (3) and configured to measure the temperature therein, and the control unit (10) configured to operate the electric motor (6) such that the thermal protection member (5) is moved from the open position toward the closed position when the value received from the temperature sensor exceeds a predetermined threshold value set by the manufacturer.
